# EUROPEAN PATENT APPLICATION

(11) **EP 3 839 181 A1**
(43) Date of publication of application: **23.06.2021**
(21) Application number: 19383126.0
(22) Date of filing: 17.12.2019
(51) Int. Cl.: E05C 19/14, B61C 1/14, E05C 3/04

(54) **LATCH ASSEMBLY**

(71) Applicant: Airbus Defence and Space SAU, 28906 Getafe (ES)
(72) Inventor: ESCRIBANO SERRANO, Carlos Manuel, 28906 Getafe (ES); DE RABANO GARCIA, Daniel, 28906 Getafe (ES); PEREZ SIERRA, Jose Carlos, 28906 Getafe (ES); GALINDO FERNANDEZ, Gabriel, 28906 Getafe (ES)
(74) Representative: Elzaburu S.L.P.

(57) **Abstract**

Latch assembly, comprising:
- a hook (6) assembly (2) movable between a locked position and a released position,
- a handle (10) assembly (1),
- a shaft (3, 4),
- the handle (10) assembly (1) being:
• coupled to a first longitudinal portion of the shaft (3, 4),
• rotary movable with respect to the longitudinal axis of the shaft (3, 4),

- the hook (6) being:
• coupled to a second longitudinal portion of the shaft (3, 4), and
• movable in a plane located in the second portion of the shaft (3, 4) longitudinally spaced apart from the handle (10),

the shaft (3, 4) and the hook (6) being configured such that the rotational movement of the shaft (3, 4) around its longitudinal axis moves the hook (6) in the plane located in the second portion of the shaft (3, 4) between the lock position and the released position.

## Description

### Field of the invention

The invention relates to a latch assembly that is applicable to any kind of aircraft and any areas where a latch is necessary for opening and closing operations. These kinds of latch assemblies are usually intended to be used and installed on either aircraft or car doors.

### Background of the invention

Latch assemblies comprising:
- a hook assembly that is movable between a locked position of the latch assembly in which the hook maintains the latch assembly in a restrained position and a released position of the latch assembly in which the hook releases the latch assembly, and
- a handle assembly configured for actuating the hook and bolt assembly between the locked position and released position,
are known.

It is known a latch assembly in which the hook is configured to be hooked to an anchoring device in the locked position, more specifically, it is known that the anchoring device is a bolt.

Latches with adjustable handles are known from documents US20110227350, WO2011115792, EP2547848 and ES2548281 and pin latches with detection are known from documents US20130140832, WO2013081910 and EP2785937.

The first before mentioned documents have the drawback of a limited hook rigging or adjustment. Additionally, their hooks and handle devices, for instance, handle trigger devices, are movable in the same plane which restricts movement and potential structural layouts for opening and closing operations.

A rotary-handle latch is also known from documents US20130106122, WO2013066570, EP2773827 and ES2549683 in which a rotary movement of the handle is needed to activate its mechanism. Said rotary movement may weaken features such as simplicity, straightforward operability and fatigue strength.

It is also known a handle assembly with dual latch features from documents WO2005021906 and EP1658411 that is mainly used in car doors. Again, the handle and the hook assembly are movable in the same plane. Additionally, the load conditions in cars applications are different from the load conditions in an aircraft environment. Thus, material and stress requirements in cars are not appropriate for aircraft applications.

It is also known a latch arrangement from documents US20070220934, WO2006003356 and EP1778936. It comprises a high number of interacting mechanical elements, so the latch assembly is complex, and it requires tighter tolerances with an increase of the mechanism final cost. Furthermore, the use of an electric motor is needed for its operation.

There are also known automatic deadbolts from documents US5516160 and US5501492 and locking device for foldable top from document US20020021021 and EP1112881. They depend on keyways to properly work which has an inherent risk as the moving element might get stuck into the keyway. Additionally, its covering cases hinder maintenance and promotes dust intake. Moreover, both hooks and mechanism triggers are also located at the same plane limiting this way its combined system operability.

### Summary of the invention

The latch assembly object of the invention is a device that provides efficient and secure open-close cycles while operating any kind of door. For instance, it may be used on the rear end of a landing gear outboard door of an aircraft.

The latch assembly object of the invention comprises:
- A hook assembly movable between a locked position of the latch assembly in which the hook maintains the latch assembly in a restrained position and a released position of the latch assembly in which the hook releases the latch assembly. In an embodiment, the hook is configured to be hooked to an anchoring device in the locked position, more specifically, the anchoring device may be a bolt such that the hook relieves the bolt from its confinement for releasing the latch assembly.
- A handle assembly configured for actuating the hook assembly between the locked position and the released position.
- A shaft rotatable around its longitudinal axis and comprising a first longitudinal portion and a second longitudinal portion, the first longitudinal portion being longitudinally followed by the second longitudinal portion, and
- the handle assembly being:
   - coupled to the first longitudinal portion of the shaft,
   - rotary movable with respect to the longitudinal axis of the shaft in a first plane located in the first longitudinal portion of the shaft and perpendicular to the longitudinal axis of the shaft such that the shaft is configured to be rotated by the rotational movement of the handle,
- the hook being:
   - coupled to the second longitudinal portion of the shaft, and
   - movable in a second plane located in the second portion of the shaft longitudinally spaced apart from the first plane and perpendicular to the longitudinal axis of the shaft,
- the shaft and the hook being configured such that the rotational movement of the shaft around its longitudinal axis moves the hook in the second plane perpendicular to the longitudinal axis of the shaft releasing or locking the hook assembly.

The latch assembly of the claimed invention has the following advantages:
- It is in fact a two-part mechanism with two main devices, i.e., the handle assembly and the hook assembly. Both assemblies are in communication through a shaft and are spaced from each other along the length of the shaft.
- It is feasible to change its support sizing while having the internal mechanism not changed at the same time. The shaft, that carry out the movement transfer, can be designed with any required length not affecting, therefore, the system performance.
- It comprises two longitudinally spaced actuation planes, a first plane and a second plane. Therefore, the handle assembly and the hook assembly are longitudinally separated from each other along the length of the shaft allowing multiple structural configurations. This enables structural layout adaptability and space allocation availability in comparison with devices whose latches and handles are movable in a same actuation plane.
- Plug and play mindset. Actuating only to the handle, the mechanism will automatically do the rest of the movements. The operator will only have to actuate the handle in order to initiate the operation of the mechanism. No additional human or machine interaction is needed.
- Easy to unmount, as rivet nuts and bolts are mainly used.
- Low number of parts.
- Hand actuated, no dependency on an electric motor.
- Friendly repair as it comprises a sequential movement where if a mechanism failure occurs, it would be easy to identify or track down the flaw.
- No need for rotary elements, no threaded elements. There is no need for handle rigging. No keyway that may hinder movement. In conclusion, the fewer elements to be adjusted or rigged, the less complex the latch will be.
- No guide block or external case is needed, easing maintenance operations.

Hence, the latch device object of the invention implies low cost, low weight, low number of parts involved, structural layout adaptability, good, efficient and straightforward operability, easy maintenance, cost-efficient repair methods, aerodynamic flushness and an internal mechanism not too complicated or sophisticated to be manufactured and maintained.

It may also be an object of the present invention a door assembly comprising a frame and a door. The frame or the door comprises a hook assembly and a handle assembly according to the above explained. The door or the frame comprises an anchoring device of the hook, for instance, a bolt.

Finally, it is also a further object of the present invention an aircraft comprising a latch assembly according to the above.

### Description of the figures

To complete the description and in order to provide for a better understanding of the invention, a set of drawings is provided. Said drawings form an integral part of the description and illustrate preferred embodiments of the invention. The drawings comprise the following figures.

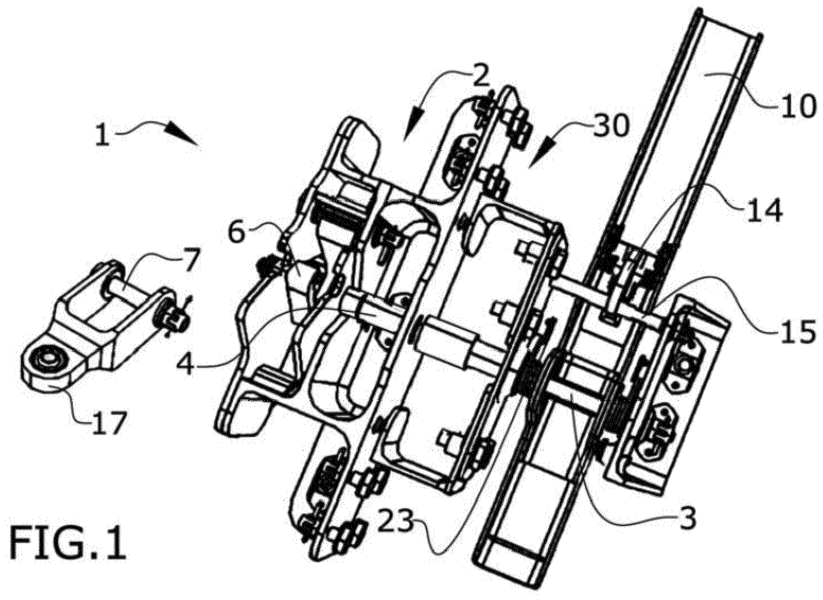

Figure 1 shows a schematic perspective view of an embodiment of a latch assembly.
Figure 2 shows a longitudinal section of an embodiment of the shaft.
Figure 3 shows a cross section view of an embodiment of the shaft.
Figures 4a, 4b, 4c and 4d show schematic lateral views of the internal elements of the latch assembly of the embodiment of figure 1 moving from a released position to a latched position.
Figures 5 show schematic lateral views of the internal elements of the latch assembly of the embodiment of figure 1 from a released position to a latched position in the event that the anchoring device is missing.
Figure 6 shows a view from the inside of the embodiment of the latch assembly of figure 1 located in a door.
Figure 7 shows a perspective view from the outside of the embodiment of the door of figure 6.
Figure 8 shows a perspective view of an embodiment showing part of the fuselage of an aircraft and of a door with an embodiment of the latch assembly.

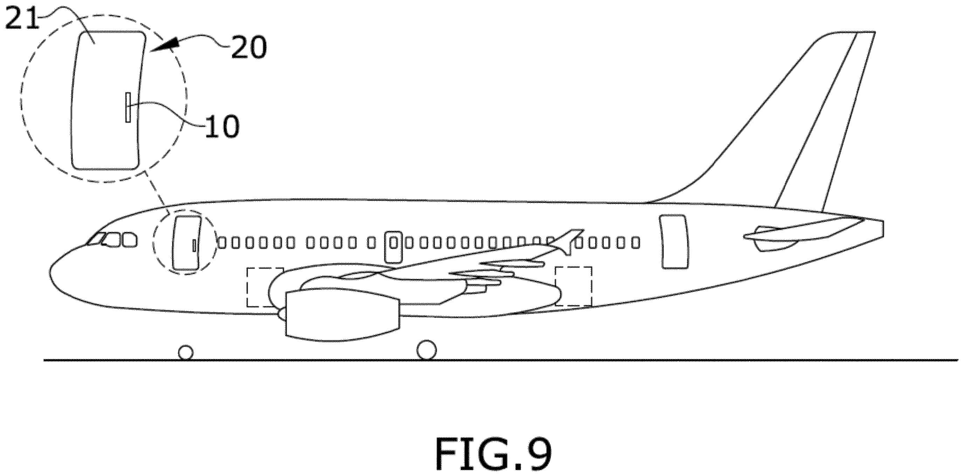

Figure 9 shows a lateral schematic view of an aircraft and a door comprising a latch assembly.

### Detailed description of the invention

The figures of the invention show a rear latch assembly system configured to be positioned in a door.

The latch assembly shown in the embodiment of the figures comprises:
- a hook (6) assembly (2). In the embodiment, the hook (6) is able to be hooked to an anchoring device, specifically to a bolt (7). The hook (6) assembly (2) is movable between a locked position of the latch assembly in which the hook (6) maintains the bolt (7) in a restrained position and a released position of the latch assembly in which the hook (6) releases the bolt (7),
- a handle (10) assembly (1) configured for actuating the hook (6) assembly (2) between the locked position and the released position,
- a shaft (3, 4) rotatable around its longitudinal axis and comprising a first longitudinal portion and a second longitudinal portion, the first longitudinal portion being longitudinally followed by the second longitudinal portion, and
- the handle (10) assembly (1) being:
   - coupled to the first longitudinal portion of the shaft (3, 4),
   - rotary movable with respect to the longitudinal axis of the shaft (3, 4) in a first plane located in the first longitudinal portion of the shaft and perpendicular to the longitudinal axis of the shaft (3, 4) such that the shaft (3, 4) is configured to be rotated by the rotational movement of the handle (10),
- the hook (6) being:
   - coupled to the second longitudinal portion of the shaft, and
   - movable in a second plane located in the second portion of the shaft longitudinally spaced of the first plane and perpendicular to the longitudinal axis of the shaft (3, 4),
- the shaft (3, 4) and the hook (6) being configured such that the rotational movement of the shaft (3, 4) around its longitudinal axis moves the hook (6) in the second plane perpendicular to the longitudinal axis of the shaft (3, 4) releasing or locking the hook (6) assembly (2).

More specifically, the shown embodiment comprises a first shaft (3) corresponding to the first longitudinal portion of the shaft (3, 4) and a second shaft (4) corresponding to the second longitudinal portion of the shaft (3, 4). The first shaft (3) and the second shaft (4) are longitudinally coupled such that the rotational movement of the first shaft (3) is transmitted into a rotational movement of the second shaft (4) around its longitudinal axis.

At the joint of both shafts (3, 4), the mechanism motion is transferred from the handle assembly (1) to the hook (6) assembly (2) allowing the mechanism operation. More specifically, both assemblies (1, 2) are found at opposite sides of a reference frame, although any other structural element can be placed in between.

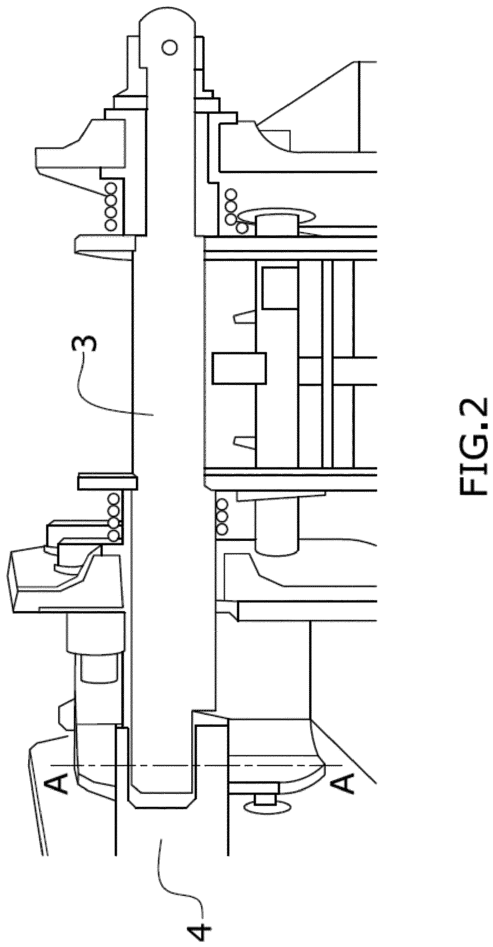

Figure 2 shows an embodiment of the first shaft (3) and the second shaft (4) comprising at their confronted ends a female-male corresponding shape for its longitudinal coupling.

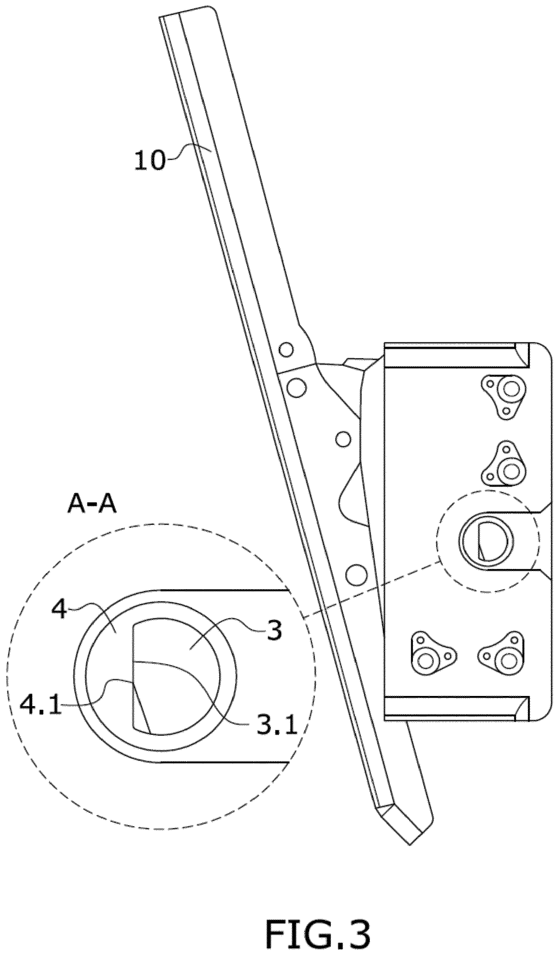

Specifically, this corresponding shape comprises both corresponding flat surfaces (3.1, 4.1), as can be seen in figure 3, such the turning of the first shaft (3) pulls the second shaft (4) through the corresponding flat surfaces (3.1, 4.1).

Additionally, the handle (10) assembly (1), the shaft (3, 4) and the hook (6) assembly (2) are configured such that the handle (10) is configured to rotate around the longitudinal axis of the shaft (3, 4) without the shaft (3, 4) transferring said rotation to the hook (6) until the handle (10) is rotated a predetermined angle of rotation.

The handle assembly (10), the shaft (3, 4) and the hook (6) assembly are configured such that the handle (10) is configured to rotate around the shaft (3, 4) a predetermined angle of rotation without the shaft (3, 4) transferring said rotation to the hook (6). It allows the operator to introduce its hand between the handle (10) and the door (21) before the hook (6) starts to rotate.

More specifically, in the shown embodiment of figure 3, the first shaft (3) is configured to rotate a predetermined angle of rotation around its longitudinal axis without transferring said rotation to the second shaft (4).

According to the embodiment shown in figure 3, there is a gap, for instance of 15º, between the flat surfaces (3.1, 4.1) of the first shaft (3) and the second shaft (4). Thus, the first shaft (3) will turn around 15º with no restrictions. Then it will enter in contact with the second shaft (4) flat surface (4.1) while doing the whole mechanism, about 99º in rotation. This procedure is to be repeated both while opening and closing the latch assembly.

The hook assembly (2) of the shown embodiment comprises a guide plate (8) comprising a surface (8.1) configured for the movement of the hook (6) between the locked position and the released position. In the shown embodiment, the guide plate (8) is also configured for the movement of the anchoring device, more specifically of the bolt (7). The bolt (7) is located between the hook (6) and the surface (8.1). The guide plate (8) constraints the hook (6) movement so that the bolt (7) does not get loose or fall down.

Moreover, the hook (6) assembly (2) comprises a lever (5) having two opposite ends, being rigidly joined to the second portion of the shaft (3, 4) by one end and pivotably joined to the hook (6) by the other end. In the shown embodiment, the lever (5) is joined to the second shaft (4). Therefore, the lever (5) acts as an interface with the second shaft (4) being rigidly coupled to this second shaft (4).

The embodiment disclosed in the figures also comprises a security lock shaft (9) rotatable around a shaft. The security lock shaft (9) is movable between a first position and a second position. The security lock shaft (9) prevents the hook (6) from being moved towards a locked position when the anchoring device, the bolt (7), is not located in its correct position, i.e., the bolt (7) is missing and, thus, it is not hooked by the hook (6).

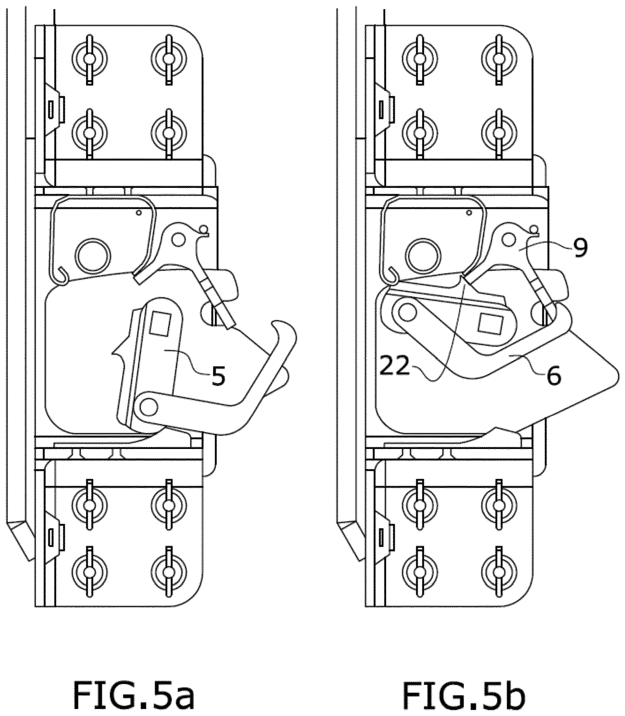

As shown in figure 5, the security lock shaft (9) is configured:
- to be pushed by the anchoring device, in the shown embodiment the bolt (7), from the second position to the first position of the security lock shaft (9), and
- to restrain the movement of the lever (5) if the bolt (7) does not push the security lock shaft (9) from the second position to the first position of the security lock shaft (9) such that the latch assembly is prevented from closing when the bolt (7) is missing.

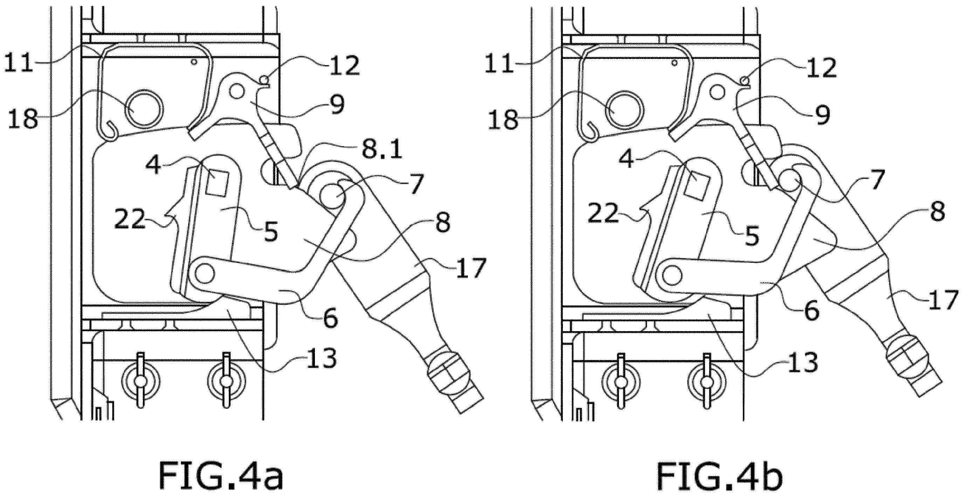

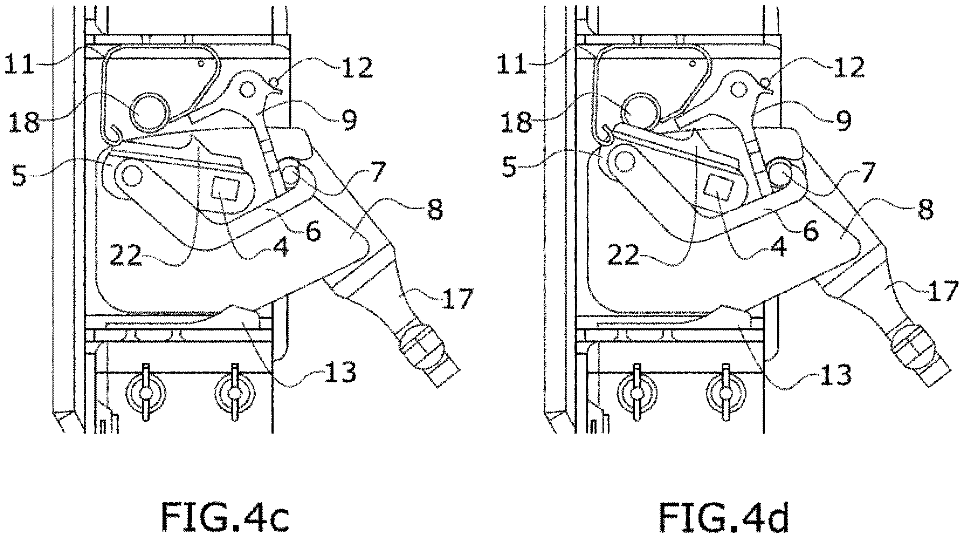

In the disclosed embodiment shown in figures 4 and 5, the security lock shaft (9) comprises two arms one of them is actuated by the bolt (7), as previously stated, while the other acts over the lever (5) for blocking its movement when the bolt (7) is missing.

In the shown embodiment, the hook (6) assembly (2) additionally comprises a retainer (11). The retainer (11) comprises an elastic element configured to be in contact with the security lock shaft (9), specifically with the arm that acts over the lever (5), for pushing the security lock shaft (9) to its second position.

More specifically, the retainer (11) is a thin sheet of steel, hence an elastic or spring element that will allow deformation while being pushed down by the security lock shaft (9). It has the advantage that is an easy to replace element if any failure occurs if they are bent excessively or after a long and repeated use.

In the first position, the lever (5) will be engaged between the moving arms of the security lock shaft (9) causing the whole mechanism to be fully locked. The lever (5) comprises a tip (22) so it is secured at this point by means the engagement of the tip (22) and the arm of the security lock shaft (9).

As shown in figures 5, the tip (22) also engages with one of the arms of the security lock shaft (9) to restrain the movement of the lever (5) when the bolt (7) does not push the security lock shaft (9) from the second position to the first position of the security lock shaft (9) because the bolt (7) is missing. It prevents unintentional closing of the door (21) without the bolt (7) being hooked.

According to the above, the bolt (7) acts together with the security lock shaft (9) and the retainer (11) to ensure the correct locking and unlocking of the rotational movement of the lever (5).

When there is no second shaft (4) rotation and, therefore, no movement transfer, the hook (6) of the bolt (7) shall be engaged. Thus, the handle (10) will be found in closed position and the security lock shaft (9) shall be constrained and stacked between the lever (5) and the retainer (11). The retainer (11) shall be delivering some pressure upon the other two elements (5, 9) as it is intended to react like a spring. Thus, the lever (5) is secured at this point by means the tip (22) and it would need an external force to get away from this interface.

When the security lock shaft (9) comes to movement thanks to the second shaft (4) rotation and due to the pressure exerted by the bolt (7), the entire lever (5) should overcome this initial constraint with no difficulty and get loose by freeing its tip (22).

The latch device (2) also comprises a stop (12) configured to limit the rotatable movement of the security lock (9) restraining excessive movement of the mechanism and will establish the limits of the mechanism internal motion. It also comprises another stop (18) to limit the rotation of the lever (5).

Being with the system open, the bolt (7) has to be able to get off the hook (6) easily and the security lock shaft (9) has to be in contact with the stop (12). This will mean that the pressure applied by the retainer (11) is being correct and will hold the security lock shaft (9) in a right position until the bolt (7) presses it down again. The stop (12) is placed in that specific position in order to leave the bolt (7) no other option than pushing the security lock shaft (9) down while it is getting locked.

It also comprises an additional stop (13) configured to be in contact with the lever (5) and the hook (6) when they are located in a released position and it avoids the lever (5) and the hook (6) to fall down when the door is open.

As shown in figure 4d, the lever (5) is configured to be movable in the lock position to an overcenter lock point such that the lever (5) cannot unlock unless the shaft (3, 4) is moved, so as to prevent any backdriving of the lever (5).

Said overcenter lock point is a fixed stop. Once in the overcentre lock point, the lever (5) cannot move or unlock unless the shaft (3, 4) is operated. The overcenter mechanism is used to provide a mechanical stop in a linkage and prevent any backdriving of the mechanism holding the mechanism at one end of the mechanism travel. It ensures that the latch assembly will not open under certain conditions, for instance, due to vibrations.

The overcenter lock point allows the latch assembly to be in a stable position in the locked position so it cannot be opened unexpectedly.

Additionally, the retainer (11) is further configured to contact and keep the lever (5) in the overcenter lock point as additional locking constraint as can be seen in figure 4d. Although in the shown embodiment such constraint is performed by the retainer (11), a different element of the retainer (11) can also perform this function of retaining the lever (5).

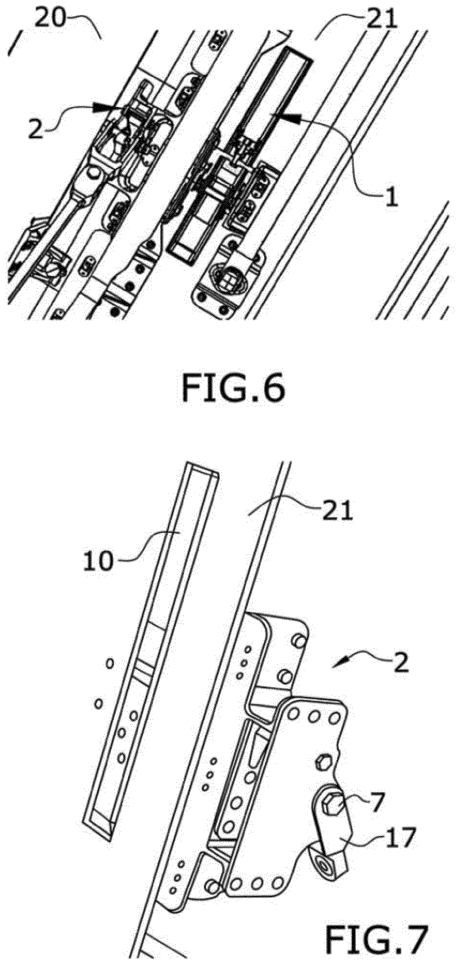

Figure 7 discloses a door assembly comprising a frame (20) and a door (21). The frame (20) or the door (21) may comprise the hook (6) and a handle (10) assembly (1) or may comprise the bolt (7).

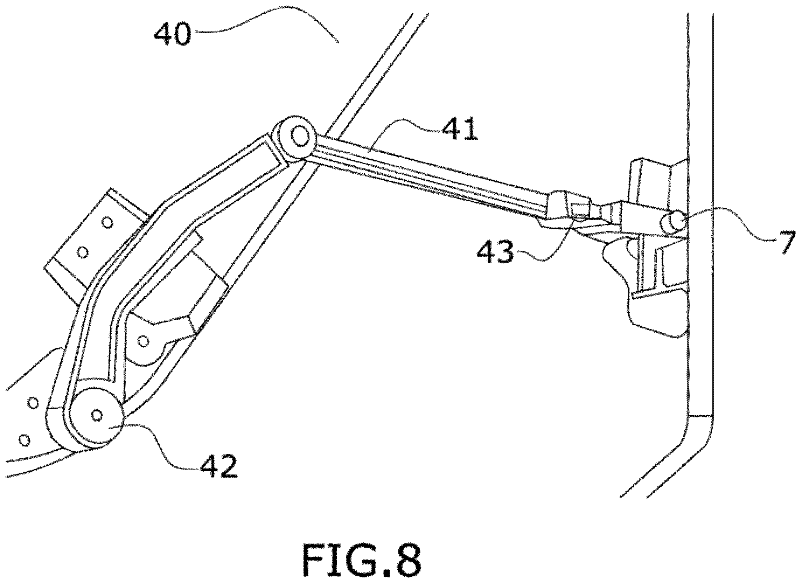

Figure 8 discloses an anchoring device comprising an arm (41) having two ends, one end (43) configured to the be hooked by the hook (6), the other end (42) is configured to be joined a fuselage (40) of an aircraft. In the embodiment shown in the figures, the anchoring device comprises a bolt (7) and the arm (41) is joined to the bolt (7) through a lug assembly (17).

If the lug assembly (17) is removed, the set lever-hook (5, 6) will not fall down as it will get constrained in movement by the stop (13) when the mechanism is open.

The handle (10) assembly (1) would be the main interface for operators to engage the door (21) and it will activate the whole mechanism. In the shown embodiments, the handle (10) is flushed with the door (21) surface.

In the shown embodiment, the first shaft (3), which is the handle (10) assembly (1) shaft, will be responsible for transmitting the handle (10) movement to the hook (6) assembly (2).

In the embodiment shown in the figures, a 114º movement of the handle (10) is to be expected for full opening of the handle (10) assembly (1). By doing this, the hook (6) will become loose so that the structural interface gets released.

In the shown embodiment, the handle (10) assembly (1) comprises a torsional spring (23) in contact with the first shaft (3) and the handle (10) to collaborate in the rotational movement of the handle (10).

Additionally, the handle (10) assembly (1) comprise a trigger (14). The trigger (14) comprises a handle hook (16) and bolt (15) that will be pushed to unlock the handle (10) that will get released from the bolt (15). The bolt (15) is sustained by the fitting assemblies and serves as the attachment interface for the trigger (14).

A fitting assembly (30) is located between the handle (10) assembly (1) and the hook (6) and bolt (7) assembly (2) that provides structural integrity and support. For instance, the stop (12) configured to limit the rotatable movement of the security lock shaft (9) is riveted to the fitting assembly (30). It also provides structural integrity and withstand first shaft (3) loads.

The latch also comprises a frame cover that will avoid dust intake and provide shelter to the mechanism, though, it will not hinder maintenance. The frame cover is the outer support of the mechanism axis. It will also comprise an additional frame support that will be fastened to the former and will provide structural integrity and housing to the rest of the parts.

The latch assembly object of the invention provides design adaptability, as the shaft (3, 4) can vary in size in order to adapt it to any kind of structural layout. Additionally, its designed 114º of movement of the handle (10) can be modified as needed by relocating the mechanical stops embedded in the device, i.e. the stop (13) of the hook (6) and the lever (5), the stop (12) of the security lock shaft (12) and stop (18) of the lever (5).

They are only two points of contact, the contact between the two shafts and the contact between the bolt and its guiding plate.

Therefore, the latch assembly object of the invention has a double function. Apart from closing and opening operations, it also provides preload conditions while engaging any item with its hook. Thus, it provides preload conditions so as to withstand aerodynamic and internal loads as well as ease rigging procedures while assembling doors on aircraft.

## Claims

1. Latch assembly, comprising:
- a hook (6) assembly (2) movable between a locked position of the latch assembly in which the hook (6) maintains the latch assembly in a restrained position and a released position in which the hook (6) releases the latch assembly,
- a handle (10) assembly (1) configured for actuating the hook (6) assembly (2) between the locked position and the released position,
**characterised in that** it comprises a shaft (3, 4) rotatable around its longitudinal axis and comprising a first longitudinal portion and a second longitudinal portion, the first longitudinal portion being longitudinally followed by the second longitudinal portion, and
- the handle (10) assembly (1) being:
• coupled to the first longitudinal portion of the shaft (3, 4),
• rotary movable with respect to the longitudinal axis of the shaft (3, 4) in a first plane located in the first longitudinal portion of the shaft (3, 4) and perpendicular to the longitudinal axis of the shaft (3, 4) such that the shaft (3, 4) is configured to be rotated by a rotational movement of the handle (10),
- the hook (6) being:
• coupled to the second longitudinal portion of the shaft (3, 4), and
• movable in a second plane located in the second portion of the shaft (3, 4) longitudinally spaced apart from the first plane and perpendicular to the longitudinal axis of the shaft (3, 4),
- the shaft (3, 4) and the hook (6) being configured such that the rotational movement of the shaft (3, 4) around its longitudinal axis moves the hook (6) in the second plane perpendicular to the longitudinal axis of the shaft (3, 4) between the lock position and the released position.

2. Latch assembly, according to claim 1, wherein the shaft (3, 4) comprises a first shaft (3) corresponding to the first longitudinal portion and a second shaft (4) corresponding to the second longitudinal portion, the first shaft (3) and the second shaft (4) being longitudinally coupled such that the rotational movement of the first shaft (3) around its longitudinal axis is transmitted into a rotational movement of the second shaft (4) around its longitudinal axis.

3. Latch assembly, according to claim 2, wherein the first shaft (3) and the second shaft (4) comprise coupling ends comprising a female-male corresponding shape.

4. Latch assembly, according to any preceding claim, wherein the handle (10) assembly (1), the shaft (3, 4) and the hook (6) assembly (2) are configured such that the handle (10) is configured to rotate around the longitudinal axis of the shaft (3, 4) a predetermined angle of rotation without the shaft (3, 4) transferring said rotation to the hook (6).

5. Latch assembly, according to claims 2, 3 and 4, wherein the first shaft (3) is configured to rotate around its longitudinal axis a predetermined angle of rotation without transferring said rotation to the second shaft (4).

6. Latch assembly, according to any preceding claim, wherein the hook (6) assembly (2) comprises a guide plate (8) comprising a surface (8.1) configured for guiding the hook (6) in its movement between the locked position and the released position of the latch device (2).

7. Latch assembly, according to any preceding claim, wherein the hook (6) assembly (2) comprises a lever (5) having two opposite ends, said lever (5) being rigidly joined to the second portion of the shaft (3, 4) by one end and pivotably joined to the hook (6) by the other end.

8. Latch assembly, according to claim 7, wherein the hook (6) is configured to be hooked to an anchoring device in the locked position and the hook (6) assembly (2) further comprises a security lock shaft (9) rotatable between a first position and a second position, such that the security lock shaft (9) is configured:
- to be pushed by the anchoring device from the second position to the first position of the security lock shaft (9) when locking the latch assembly, and
- to restrain the movement of the lever (5) if the anchoring device does not push the security lock shaft (9) from the second position to the first position of the security lock shaft (9) such that the latch assembly is prevented from closing when the anchoring device is missing.

9. Latch assembly, according to claim 8, wherein the hook (6) assembly (2) comprises a retainer (11) comprising an elastic element configured to be in contact with the security lock shaft (9) for pushing it to the second position.

10. Latch assembly, according any preceding claim 7 to 9, wherein the lever (5) is configured to be movable in the lock position to an overcenter lock point such that the lever (5) cannot unlock unless the shaft (3, 4) is moved, so as to prevent any backdriving of the lever (5).

11. Latch assembly, according to claims 9 and 10, wherein the retainer (11) is further configured to contact and keep the lever (5) in the overcenter lock point as additional locking constraint.

12. Latch assembly, according to any preceding claim 8 to 11, wherein the hook (6) assembly (2) comprises a stop (12) configured to limit the rotatable movement of the security lock shaft (9).

13. Latch assembly, according to any preceding claim 7 to 12, wherein the hook (6) assembly (2) comprises a stop (13) configured to be in contact with the lever (5) and the hook (6) when they are located in a released position.

14. Latch assembly, according to claim 8, wherein the anchoring device comprises an arm (41) having two ends, one end (43) configured to the be hooked by the hook (6) and the other end (42) configured to be joined a fuselage (40) of an aircraft.

15. Aircraft, **characterized in that** it comprises a latch assembly according to any preceding claim.
